# FASCICULE DE BREVET EUROPEEN

(11) **EP 4 016 172 B1**
(45) Date de publication et mention de la délivrance du brevet: **14.05.2025**
(21) Numéro de dépôt: 20216141.0
(22) Date de dépôt: 21.12.2020
(51) Int. Cl.: G02F 1/1335, G02F 1/1333, G04G 9/12

(54) **PROCÉDÉ DE FABRICATION D'UN DISPOSITIF D'AFFICHAGE À CRISTAL LIQUIDE ET DISPOSITIF D'AFFICHAGE A CRISTAL LIQUIDE**
VERFAHREN ZUR HERSTELLUNG EINER FLÜSSIGKRISTALLANZEIGEVORRICHTUNG UND FLÜSSIGKRISTALLANZEIGEVORRICHTUNG
METHOD FOR MANUFACTURING A LIQUID CRYSTAL DISPLAY DEVICE AND LIQUID CRYSTAL DISPLAY DEVICE

(43) Date de publication de la demande: 22.06.2022
(73) Titulaire: The Swatch Group Research and Development Ltd, 2074 Marin (CH)
(72) Inventeur: SAGARDOYBURU, Michel, 2000 Neuchâtel (CH); SPRINGER, Simon, 3007 Berne (CH)
(74) Mandataire: ICB SA

(56) Documents cités:
- US-A- 5 926 293
- US-A1- 2002 015 836
- US-A1- 2003 198 141
- US-A1- 2007 153 162

## Description

### Domaine technique de l'invention

La présente invention concerne un procédé de fabrication d'un dispositif d'affichage à cristal liquide de même qu'un dispositif d'affichage à cristal liquide obtenu notamment grâce à ce procédé. La présente invention concerne en particulier un procédé de fabrication permettant de munir un dispositif d'affichage à cristal liquide d'un motif décoratif et/ou fonctionnel perceptible à travers une surface d'affichage transparente de ce dispositif d'affichage à cristal liquide.

### Arrière-plan technologique de l'invention

La présente invention s'intéresse aux dispositifs d'affichage de type digital, c'est-à-dire les dispositifs d'affichage qui sont capables d'afficher des informations sous forme alphanumérique, par opposition aux dispositifs d'affichage analogiques qui affichent les informations au moyen d'une ou de plusieurs aiguilles qui se déplacent en regard de graduations.

Une famille bien connue de dispositifs d'affichage digitaux regroupe les dispositifs d'affichage à cristaux liquides. Ces dispositifs d'affichage à cristaux liquides comprennent classiquement une cellule à cristaux liquides formée d'un substrat avant transparent situé du côté d'un observateur, et d'un substrat arrière, transparent ou non, qui s'étend parallèlement et à distance du substrat avant. Ces deux substrats avant et arrière sont habituellement réunis entre eux au moyen d'un cadre de scellement qui délimite une enceinte étanche dans laquelle une composition de cristal liquide est confinée. Enfin, les substrats avant et arrière sont revêtus sur leurs faces en regard d'électrodes et de contre-électrodes transparentes électriquement conductrices ; par application d'un champ électrique entre une électrode et une contre-électrode correspondante, on modifie les propriétés optiques de la composition de cristal liquide au point de croisement de l'électrode et de la contre-électrode considérées.

Dans le cadre de la présente invention, on s'intéresse aux cellules à cristaux liquides de type :
- nématique en hélice -encore appelées Twist Nematic ou TN en terminologie anglo-saxonne- ;
- super nématique en hélice -encore appelées Super Twist Nematic ou STN en terminologie anglo-saxonne- ;
- Guest Host ;
- à alignement vertical -encore appelées Vertically Aligned ou VA en terminologie anglo-saxonne-, et
- à biréfringence commandée électriquement -encore appelées Electrically Controlled Birefringence ou ECB en terminologie anglo-saxonne-.

Pour pouvoir fonctionner en mode réflectif, les cellules à cristaux liquides de type TN, STN, Guest Host ou bien VA ou ECB doivent être munies d'un polariseur réflectif qui, le plus souvent, est laminé contre une face inférieure du substrat arrière et dont la fonction est de réfléchir la lumière qui pénètre dans la cellule à cristal liquide par la face avant de cette dernière et traverse cette cellule à cristal liquide sur toute son épaisseur, jusqu'à se réfléchir sur lui.

Il existe plusieurs types de polariseurs réfléchissants qui, selon le cas, fournissent une réflexion spéculaire ou diffuse. Un premier type de polariseur réflectif se compose d'un polariseur de type absorbant/transparent. Un tel type de polariseur absorbe une première composante de la lumière et transmet l'autre composante de la lumière polarisée selon une direction orthogonale à celle de la première composante. Pour former le polariseur réflectif, on munit la face inférieure du polariseur absorbant/transparent d'un réflecteur, par exemple une couche mince métallique d'aluminium ou d'argent, sur lequel la lumière transmise par le polariseur absorbant/transparent se réfléchit et est renvoyée vers le haut de la cellule à cristal liquide, en direction de l'observateur.

Dans le cas d'une cellule à cristal liquide de type transflectif, c'est-à-dire qui est à la fois réfléchissante et transparente, le polariseur devra être partiellement réfléchissant et transparent. Pour pouvoir obtenir un tel polariseur à la fois partiellement réfléchissant et transparent, une solution consiste à réduire l'épaisseur de la couche métallique dont est muni le polariseur absorbant à une valeur très faible, de l'ordre de quelques nanomètres, que l'on contrôle avec précision. Une telle cellule à cristal liquide transflective est ensuite équipée d'un dispositif de rétroéclairage disposé sous le substrat arrière et qui émet de la lumière à travers le polariseur partiellement réfléchissant/transparent vers le haut de la cellule à cristal liquide.

Une autre solution pour permettre à une cellule à cristal liquide de type TN, STN, Guest Host, VA ou ECB de fonctionner en mode réflectif consiste à équiper une telle cellule à cristal liquide d'un polariseur réflectif/transparent qui réfléchit une direction de polarisation de la lumière et qui est transparent pour la direction de polarisation de la lumière orthogonale. Un tel polariseur réflectif/transparent peut être du type « Coextruded Multilayer Birefringent Interference Polarizer » comme celui commercialisé par la société 3M sous la marque Dual Brightness Enhancement Film ou bien du type polariseur à nano-grille également connu sous sa dénomination anglo-saxonne Wire-grid Polarizer. Le polariseur réflectif/transparent est fixé, par exemple par laminage, sur la face inférieure du substrat arrière, et un fond noir ou coloré est ajouté à sa suite pour absorber la lumière qui ne doit pas être réfléchie. Dans le cas où l'on souhaite obtenir une cellule à cristal liquide transflective, le fond noir ou coloré sera seulement partiellement absorbant pour laisser passer la lumière produite par un dispositif de rétroéclairage disposé sous le substrat arrière.

Il existe aussi des dispositifs d'affichage comprenant une cellule à cristal liquide munie d'un unique polariseur sur une face supérieure de son substrat avant, tandis qu'un réflecteur métallique est disposé entre son substrat avant et son substrat arrière.

Les dispositifs d'affichage à cristal liquide de l'art antérieur qui comprennent une cellule d'affichage de type TN, STN, Guest Host, VA ou ECB affichent ainsi des informations sous forme de caractères alphanumériques ou d'icônes qui se détachent sur un fond plan homogène, de type spéculaire ou diffusant. Il y a donc peu de variations d'aspect possibles entre ces dispositifs d'affichage à cristaux liquides de l'art antérieur, de sorte qu'il est difficile pour les fabricants de se démarquer les uns des autres. De même, les objets comme en particulier les montres-bracelets qui sont équipés de tels dispositifs d'affichage à cristaux liquides présentent des aspects très similaires.

Le document US 5926293A décrit un afficheur comprenant un élément d'affichage produisant des images tel qu'une cellule d'affichage à cristal liquide disposée entre un polariseur avant et un polariseur croisé. Un transflecteur holographique est disposé à l'arrière de la cellule d'affichage à cristal liquide. Ce transflecteur holographique a à la fois des propriétés de réflexion et de transmission de la lumière. US 2003/198141 A1 et US 2002/015836 A1 sont des documents de l'art antérieur utiles à la compréhension de l'invention.

### Résumé de l'invention

La présente invention a pour but de remédier aux problèmes mentionnés ci-dessus ainsi qu'à d'autres encore en procurant un procédé de fabrication permettant de réaliser des dispositifs d'affichage à cristaux liquides de type réflectif ou transflectif dont les aspects peuvent être variés à l'infini. La présente invention a également pour but de procurer des dispositifs d'affichage à cristaux liquides de type réflectif ou transflectif qui présentent un aspect esthétique original.

A cet effet, la présente invention concerne un procédé de fabrication d'un dispositif d'affichage à cristal liquide comprenant une cellule à cristal liquide réflective ou transflective dont les molécules de cristal liquide sont alignées de manière planaire ou verticale, cette cellule à cristal liquide étant formée d'un substrat avant transparent situé du côté d'un observateur, et d'un substrat arrière, également transparent, qui s'étend sous le substrat avant, parallèlement et à distance de celui-ci, ces deux substrats avant et arrière étant réunis entre eux au moyen d'un cadre de scellement qui délimite une enceinte étanche dans laquelle une composition de cristal liquide est confinée, les substrats avant et arrière étant revêtus sur leurs faces en regard d'électrodes et de contre-électrodes transparentes électriquement conductrices, les propriétés optiques de la composition de cristal liquide étant modifiées par application d'un champ électrique au point de croisement entre une électrode et une contre-électrode correspondante, le dispositif d'affichage à cristal liquide étant muni d'un film polarisant réflecteur agencé pour absorber une première composante d'une lumière qui pénètre dans la cellule à cristal liquide par le substrat avant, et pour réfléchir une seconde composante de la lumière polarisée selon une direction orthogonale à celle de la première composante, le procédé comprenant l'étape qui consiste à mettre le film polarisant réflecteur en relief pour lui impartir une forme décorative et/ou fonctionnelle visible par l'observateur à travers le substrat avant de la cellule à cristal liquide, puis à fixer ce film polarisant réflecteur contre une face inférieure du substrat arrière.
- Selon des formes particulières d'exécution de l'invention :
- le film polarisant réflecteur est mis en relief en le plaquant contre un moule présentant des formes en relief qui correspondent aux formes que l'on cherche à imprimer à ce film polarisant réflecteur ;
- le film polarisant réflecteur est plaqué contre le moule en relief en créant un vide d'air ;
- durant le temps où le film polarisant réflecteur est plaqué contre le moule en relief, ce film polarisant réflecteur est chauffé ;
- le film polarisant réflecteur est mis en relief par insert-injection moulding ;
- une fois le film polarisant réflecteur mis en relief, on dépose successivement sur une face supérieure du film polarisant réflecteur une couche de nivellement transparente et une couche d'adhésif au moyen de laquelle le film polarisant réflecteur est fixé à la cellule à cristal liquide ;
- immédiatement après mise en relief du film polarisant réflecteur et dépôt de la couche de nivellement transparente, on applique la cellule à cristal liquide contre la couche de nivellement transparente et on solidifie la couche de nivellement transparente ;
- la couche d'adhésif est formée d'un adhésif optiquement transparent encore appelé Optical Clear Adhesive ou OCA qui se présente sous la forme d'un film sensible à la pression qui est laminé sur la couche de nivellement transparente ou qui est dispensé en couche de colle liquide sur cette couche de nivellement transparente ;
- l'adhésif optiquement transparent est partiellement diffusant ;
- on dépose au dos du film polarisant réflecteur une couche de nivellement transparente ;
- la couche de nivellement transparente déposée sur la face supérieure du film polarisant réflecteur et, le cas échéant, la couche de nivellement transparente déposée au dos du film polarisant réflecteur sont obtenues au moyen d'une résine photo-polymérisable ;
- la couche de nivellement transparente déposée sur la face supérieure du film polarisant réflecteur et, le cas échéant, la couche de nivellement transparente déposée au dos du film polarisant réflecteur, sont polymérisées au moyen d'un rayonnement ultraviolet ;
- avant sa mise en relief, le film polarisant réflecteur est muni sur une face supérieure d'une couche diffusante afin de créer une réflexion au moins partiellement diffuse ;
- le film polarisant réflecteur comprend un polariseur réflectif combiné avec un fond au moins partiellement absorbant disposé au dos du polariseur réflectif ;
- le fond au moins partiellement absorbant est noir ou coloré ;
- le fond noir ou coloré est une couche d'encre ou un film laminé appliqué au dos du polariseur réflectif soit avant mise en forme de ce polariseur réflectif, de sorte que ce fond noir ou coloré est mis en forme en même temps que le polariseur réflectif, ou bien après mise en forme du polariseur réflectif ;
- lorsque le fond est partiellement absorbant, un dispositif de rétroéclairage est disposé sous ce fond ;
- le film polarisant réflecteur comprend un polariseur réflectif combiné avec un polariseur absorbant qui est collé au dos du polariseur réflectif, l'ensemble des deux polariseurs réflectif et absorbant étant mis en relief simultanément ;
- le film polarisant réflecteur comprend un polariseur absorbant combiné avec un réflecteur au moins partiellement réfléchissant disposé sous le polariseur absorbant ;
- le réflecteur est métallique ;
- lorsque le réflecteur est partiellement réfléchissant, un dispositif de rétroéclairage est disposé sous le film polarisant réflecteur.

La présente invention concerne également un dispositif d'affichage à cristal liquide comprenant une cellule à cristal liquide réflective ou transflective dont les molécules de cristal liquide sont alignées de manière planaire ou verticale, cette cellule à cristal liquide étant formée d'un substrat avant transparent situé du côté d'un observateur, et d'un substrat arrière, également transparent, qui s'étend sous le substrat avant, parallèlement et à distance de celui-ci, ces deux substrats avant et arrière étant réunis entre eux au moyen d'un cadre de scellement qui délimite une enceinte étanche dans laquelle une composition de cristal liquide est confinée, les substrats avant et arrière étant revêtus sur leurs faces en regard d'électrodes et de contre-électrodes transparentes électriquement conductrices, les propriétés optiques de la composition de cristal liquide étant modifiées par application d'un champ électrique au point de croisement entre une électrode et une contre-électrode correspondante, le dispositif d'affichage à cristal liquide étant muni d'un film polarisant réflecteur pour absorber une première composante d'une lumière qui pénètre dans la cellule à cristal liquide par le substrat avant, et pour réfléchir une seconde composante de la lumière polarisée selon une direction orthogonale à celle de la première composante, le film polarisant réflecteur présentant des reliefs décoratifs et/ou fonctionnels visibles par un observateur à travers le substrat avant de la cellule à cristal liquide, le film polarisant réflecteur étant fixé contre une face inférieure du substrat arrière.

Selon des formes particulières d'exécution :
- le film polarisant réflecteur comprend un polariseur réflectif combiné avec un fond au moins partiellement absorbant disposé au dos du polariseur réflectif ;
- le fond au moins partiellement absorbant est noir ou coloré ;
- le fond noir ou coloré est une couche d'encre ou un film laminé appliqué au dos du polariseur réflectif ;
- le film polarisant réflecteur comprend un polariseur réflectif combiné avec un polariseur absorbant qui est collé au dos du polariseur réflectif, l'ensemble des deux polariseurs réflectif et absorbant étant en relief ;
- le film polarisant réflecteur comprend un polariseur absorbant combiné avec un réflecteur au moins partiellement réfléchissant disposé sous le polariseur absorbant ;
- le réflecteur est métallique ;
- lorsque le réflecteur est partiellement réfléchissant, un dispositif de rétroéclairage est disposé sous ce dernier.

L'invention concerne également une pièce d'horlogerie comprenant un dispositif d'affichage du genre ci-dessus.

Grâce à ces caractéristiques, la présente invention procure un procédé de fabrication de dispositifs d'affichage à cristaux liquides réflectifs ou transflectifs qui affichent des informations alphabétiques, numériques ou autres sur des fonds en relief qui présentent des aspects novateurs et très différents les uns des autres. Ce résultat est atteint en enseignant d'imprimer au film polarisant réflecteur des formes en relief qui vont être perceptibles à l'œil nu par le porteur de la montre lorsqu'il va regarder la surface d'affichage utile de la cellule à cristal liquide. En particulier, dans le cas où un dispositif d'affichage à cristal liquide selon l'invention est embarqué dans une montre-bracelet, on peut mettre le film polarisant réflecteur en relief pour lui donner une texture imitant l'aspect des cadrans de montre classiques : clous de Paris, côtes de Genève, effet tissage, brossé soleil, guillochages etc. On peut également imprimer au film polarisant réflecteur de simples variations de hauteurs pour mettre en évidence des zones avec ou sans texture, ou bien des zones de la surface d'affichage utile de la cellule à cristal liquide où se trouvent des segments d'affichage. Enfin, grâce à l'invention, il est aussi possible d'imprimer dans le film polarisant réflecteur des motifs figuratifs tels que des motifs végétaux, ou bien des motifs inspirés de camés, de faces de pièces de monnaies, de sculptures ou bien encore de bas-reliefs. La présente invention permet ainsi aux fabricants de montres ou d'autres produits électroniques comprenant un dispositif d'affichage à cristal liquide réflectif ou transflectif d'offrir à leurs clients des objets dont l'esthétique est originale et se démarque de la concurrence tout en utilisant une technologie à base de cristal liquide conventionnelle et bien maîtrisée et donc fiable et peu onéreuse. La possibilité qu'offre la présente invention de changer facilement le décor arrière d'un dispositif d'affichage à cristal liquide permet aux fabricants de disposer d'une large gamme de produits ayant des aspects esthétiques différents mais qui repose sur une plateforme technologique commune, ce qui permet de mutualiser les coûts de fabrication. Par exemple, la forme des segments et des icônes d'une cellule à cristal liquide selon l'invention pourra être commune à plusieurs dispositifs d'affichage ayant néanmoins des éléments décoratifs et/ou techniques différents.

### Brève description des figures

D'autres caractéristiques et avantages de la présente invention ressortiront plus clairement de la description détaillée qui suit d'un mode de mise en œuvre du procédé selon l'invention, cet exemple étant donné à titre purement illustratif et non limitatif seulement en liaison avec le dessin annexé sur lequel :
- la figure 1 est une vue en coupe d'un dispositif d'affichage à cristal liquide comprenant une cellule à cristal liquide munie d'un film polarisant réflecteur comportant un polariseur réflectif combiné avec un fond noir ou coloré ;
- la figure 2 est une vue en coupe d'un dispositif d'affichage à cristal liquide comprenant une cellule à cristal liquide munie d'un film polarisant réflecteur comportant un film polarisant absorbant combiné avec un réflecteur métallique ;
- la figure 3 est une vue schématique en coupe d'un film polarisant réflecteur comprenant un polariseur réflecteur et un fond noir auxquels ont été imparties des formes en relief, les creux du film polarisant réflecteur étant remplis au moyen d'une couche de nivellement transparente ;
- la figure 4 est une vue analogue à celle de la figure 3, la couche de nivellement transparente ayant elle-même été recouverte d'une couche d'adhésif optiquement transparent ;
- la figure 5 illustre la solidarisation du film polarisant réflecteur sur la face inférieure du substrat arrière de la cellule à cristal liquide au moyen d'une couche d'adhésif optiquement actif ;
- la figure 6 illustre schématiquement en coupe la solidarisation du film polarisant réflecteur sur la face inférieure du substrat arrière de la cellule à cristal liquide directement via la couche de nivellement transparente ;
- la figure 7 est une vue schématique en coupe d'un film polarisant réflecteur mis en relief avec, sur sa face supérieure, une couche diffusante permettant de créer une réflexion au moins partiellement diffuse ;
- la figure 8 est une vue schématique en coupe illustrant la solidarisation, au moyen d'une couche d'adhésif optiquement transparent, du film polarisant réflecteur muni d'une couche diffusante sur la face inférieure du substrat arrière de la cellule à cristal liquide ;
- la figure 9 est une vue schématique en coupe illustrant la solidarisation, au moyen d'une couche d'adhésif optiquement diffusante, d'un film polarisant réflecteur comprenant un polariseur réflectif combiné avec un fond noir ou coloré et sur lequel a été déposé une couche de nivellement transparente ;
- la figure 10 illustre schématiquement en coupe un ensemble formé d'un polariseur réflectif et d'un polariseur absorbant mis en relief et fixé contre la face inférieure d'un substrat arrière d'une cellule à cristal liquide via une couche de nivellement transparente et une couche d'adhésif, un dispositif de rétroéclairage étant disposé sous cet empilement ;
- la figure 11 est une vue schématique en coupe d'une cellule à cristal liquide munie d'un polariseur réflecteur qui, après avoir été mis en relief, reçoit dans les creux de son dos une couche de nivellement transparente sur la face plane de laquelle est laminé un polariseur absorbant, le montage étant complété par un dispositif de rétroéclairage disposé sous la cellule à cristal liquide ;
- la figure 12 illustre schématiquement en coupe une cellule à cristal liquide munie d'un film polarisant réflecteur comprenant un polariseur absorbant combiné avec un réflecteur réfléchissant ;
- la figure 13 est une vue analogue à celle de la figure 12 sur laquelle un dispositif de rétroéclairage est disposé sous la cellule à cristal liquide, et
- la figure 14 est une vue d'une montre-bracelet équipée d'une cellule à cristal liquide dont le film polarisant réflecteur, disposé sous le dispositif d'affichage à cristal liquide, a été mis en relief pour afficher une image figurative d'un camé à travers la surface d'affichage utile de la cellule à cristal liquide.

### Description détaillée de l'invention

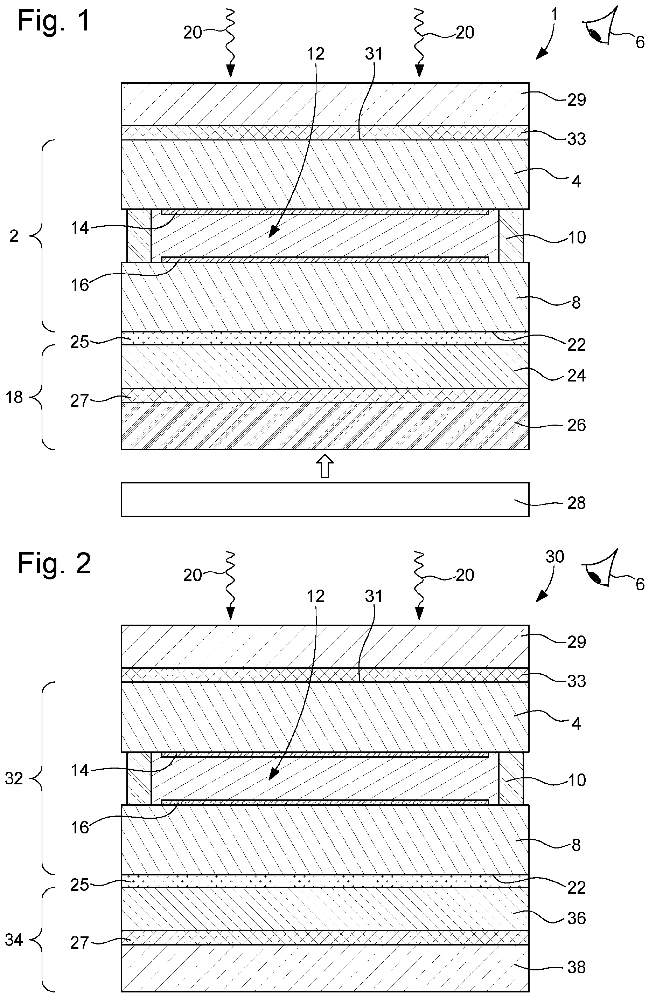

La figure 1 est une vue en coupe d'un dispositif d'affichage à cristal liquide désigné dans son ensemble par la référence numérique générale 1. Ce dispositif d'affichage à cristal liquide 1 comprend une cellule à cristal liquide 2 qui comporte un substrat avant 4 transparent situé du côté d'un observateur 6, et un substrat arrière 8, également transparent, qui s'étend sous le substrat avant 4, parallèlement et à distance de celui-ci. Les deux substrats avant 4 et arrière 8 sont réunis entre eux au moyen d'un cadre de scellement 10 qui délimite une enceinte étanche 12 dans laquelle une composition de cristal liquide est confinée. Les substrats avant 4 et arrière 8 sont revêtus sur leurs faces en regard d'électrodes 14 et de contre-électrodes 16 transparentes électriquement conductrices. Les propriétés optiques de la composition de cristal liquide sont modifiées par application d'un champ électrique au point de croisement entre une électrode 14 et une contre-électrode 16 correspondante. La cellule à cristal liquide 2 est munie d'un film polarisant réflecteur 18 agencé pour absorber une première composante d'une lumière 20 qui pénètre dans la cellule à cristal liquide 2 par le substrat avant 4, et pour réfléchir une seconde composante de la lumière polarisée selon une direction orthogonale à celle de la première composante.

La cellule à cristal liquide 2 illustrée à la figure 1 est réflective ou tout au moins transflective. A cet effet, cette cellule à cristal liquide 2 est munie d'un film polarisant réflecteur 18 fixé contre une face inférieure 22 du substrat arrière 8. Ce film polarisant réflecteur 18 comprend un polariseur réflectif 24 combiné avec un fond 26 noir ou coloré qui peut être constitué d'une couche d'encre ou d'un film laminé. Selon que ce fond 26 est partiellement ou totalement absorbant, la cellule à cristal liquide 2 est transflective, respectivement réflective. Dans le cas où la cellule à cristal liquide 2 est transflective, un dispositif de rétroéclairage 28 est disposé sous le film polarisant réflecteur 18.

Le polariseur réflectif 24 est collé sur la face inférieure 22 du substrat arrière 8 au moyen d'une couche d'adhésif 25 formée d'un adhésif optiquement transparent encore appelé Optical Clear Adhesive ou OCA en terminologie anglo-saxonne. De même, le fond 26 est collé sous le polariseur réflectif 24 au moyen d'une couche d'adhésif 27. Enfin, la cellule à cristal liquide 2 comprend également un polariseur absorbant 29 collé sur la face supérieure 31 du substrat avant 4 au moyen d'une couche d'adhésif 33.

La figure 2 est une vue en coupe d'un dispositif d'affichage à cristal liquide 30 comprenant une cellule à cristal liquide 32. Ce dispositif d'affichage à cristal liquide 30 se distingue du dispositif d'affichage à cristal liquide 1 représenté sur la figure 1 en ce que le film polarisant réflecteur 34 comprend un polariseur absorbant 36 combiné avec un réflecteur 38 au moins partiellement réfléchissant. Lorsque ce réflecteur 38 qui est préférentiellement mais non limitativement métallique n'est que partiellement réfléchissant, la cellule à cristal liquide 32 est transflective et un dispositif de rétroéclairage 28 est disposé sous le film polarisant réflecteur 34.

De même que la cellule à cristal liquide 2 décrite en liaison avec la figure 1, la cellule à cristal liquide 32 est munie d'un polariseur absorbant 29 collé sur la face supérieure 31 du substrat avant 4 au moyen d'une couche d'adhésif 33, tandis que le polariseur absorbant 36 est collé sur la face inférieure 22 du substrat arrière 8 au moyen d'une couche d'adhésif 25 et le réflecteur 38 est collé sous le polariseur absorbant 36 au moyen d'une couche d'adhésif 27.

La description qui va suivre va être faite en liaison avec une cellule à cristal liquide munie d'un film polarisant réflecteur 18 comprenant un polariseur réflectif 24 combiné avec un fond 26 noir ou coloré au moins partiellement absorbant. Il va de soi que cet exemple est donné purement à titre illustratif et que le même procédé peut être appliqué à une cellule à cristal liquide munie d'un film polarisant réflecteur 34 qui se compose d'un polariseur absorbant 36 et d'un réflecteur 38 au moins partiellement réfléchissant.

On cherche à imprimer au film polarisant réflecteur 18 des formes en relief qui vont être perceptibles à l'œil nu par l'observateur 6 lorsqu'il va regarder la surface d'affichage utile 40 de la cellule à cristal liquide 2. De la sorte, lorsque la cellule à cristal liquide 2 est embarquée par exemple dans une montre-bracelet, on peut mettre le film polarisant réflecteur 18 en relief pour lui donner une texture imitant l'aspect des cadrans de montre classiques : clous de Paris, côtes de Genève, effet tissage, brossé soleil, guillochages etc. On peut également imprimer au film polarisant réflecteur 18 des formes figuratives ou techniques telles que des motifs végétaux, ou bien des motifs inspirés de camés, de faces de pièces de monnaies, de sculptures ou bien encore de bas-reliefs.

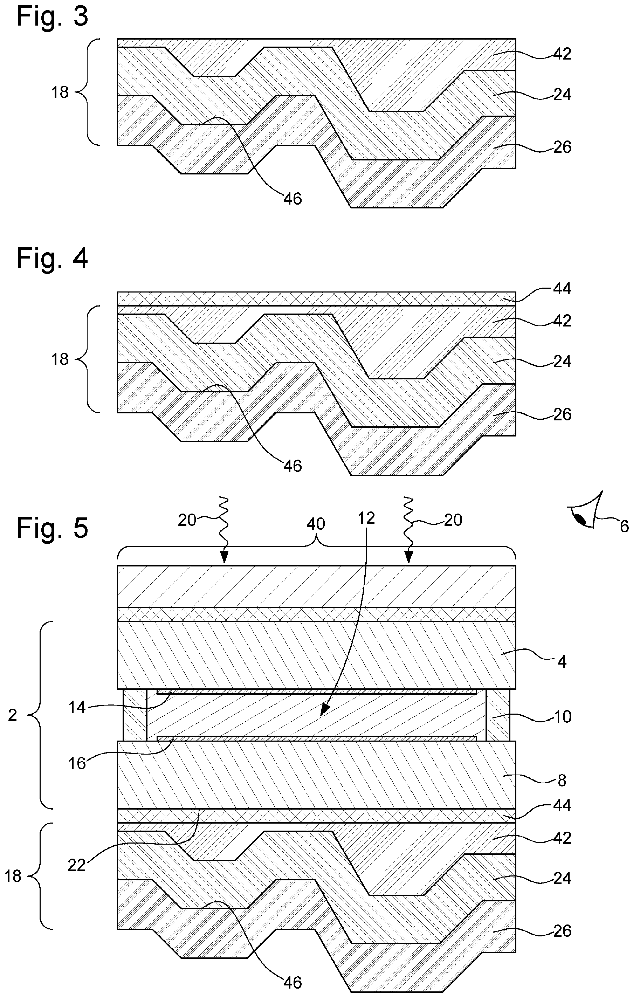

Pour atteindre ce résultat, le polariseur réflectif 24 est mis en relief en le plaquant contre un moule présentant des formes en relief qui correspondent aux formes que l'on cherche à imprimer à ce polariseur réflectif 24. De préférence, le polariseur réflectif 24 est plaqué contre le moule en relief en créant un vide d'air et, de manière plus préférée encore, le polariseur réflectif 24 est chauffé, par exemple par rayonnement, pendant le temps où il est plaqué contre le moule en relief. De la sorte, le polariseur réflectif 24 épouse fidèlement même les plus petits détails en relief du moule et se fige dans cette position en refroidissant. Après refroidissement, on dépose dans les creux du polariseur réflectif 24 une couche de nivellement transparente 42 (figure 3). Finalement (figure 4), la couche de nivellement transparente 42 est recouverte d'une couche d'adhésif 44 formée d'un adhésif optiquement transparent du type Optical Clear Adhesive ou OCA. Cette couche d'adhésif 44 se présente sous la forme d'un film sensible à la pression qui est laminé sur la couche de nivellement transparente 42 orientée du côté de la cellule à cristal liquide 2 ou est dispensée en couche de colle liquide sur cette couche de nivellement transparente 42. Cette couche d'adhésif 44 permet la solidarisation finale du film polarisant réflecteur 18 contre la face inférieure 22 du substrat arrière 8 de la cellule à cristal liquide 2 (figure 5).

Le fond 26 noir ou coloré est une couche d'encre ou un film laminé appliqué au dos 46 du polariseur réflectif 24, soit avant mise en forme de ce polariseur réflectif 24, de sorte que ce fond 26 noir ou coloré est mis en forme en même temps que le polariseur réflectif 24, ou bien après mise en forme du polariseur réflectif 24.

On comprend donc qu'il est possible soit de mettre tout d'abord en forme le polariseur réflectif 24, puis de le revêtir de son fond 26 noir ou coloré, ou bien de mettre directement en forme le film polarisant réflecteur 18 formé d'un polariseur réflectif 24 et de son fond 26 noir ou coloré. Par souci de facilité de lecture et de compréhension, on supposera dans la suite de la description que l'on a affaire à un film polarisant réflecteur 18 complet.

Selon un mode d'exécution particulier, le film polarisant réflecteur 18 complet est mis en relief en le plaquant contre le moule en relief par vide d'air, sans apport de chaleur. On dépose ensuite dans les creux du film polarisant réflecteur 18 une couche de nivellement transparente 42 formée d'une colle photo-polymérisable par exemple sensible au rayonnement ultraviolet. Avant ou après polymérisation de la couche de nivellement transparente 42, on dépose la couche d'adhésif 44 optiquement transparent sur la couche de nivellement transparente 42.

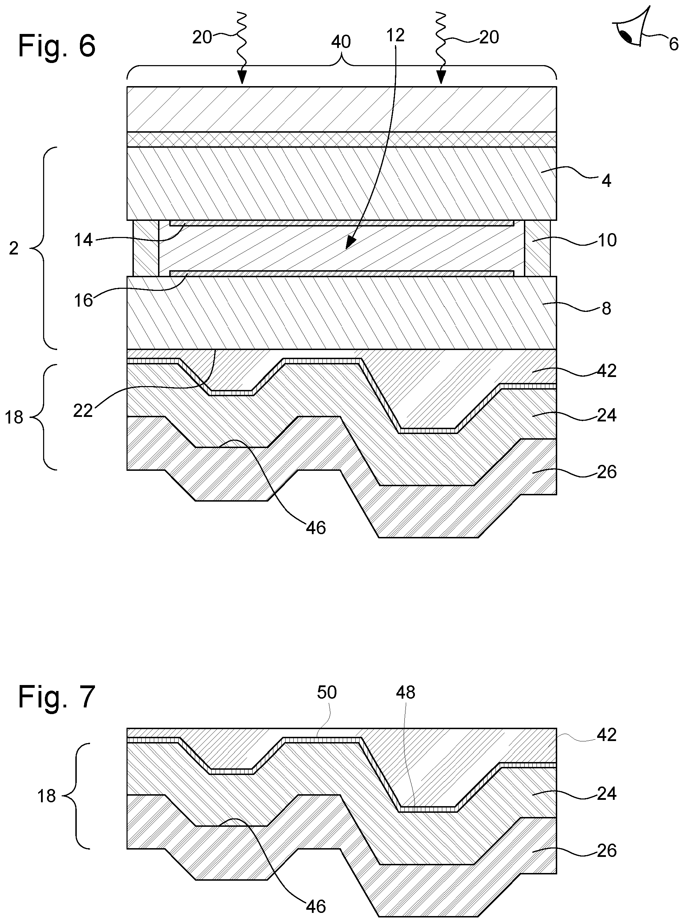

Selon un mode d'exécution particulier illustré à la figure 6, immédiatement après mise en relief du film polarisant réflecteur 18 et dépôt de la couche de nivellement transparente 42 formée d'une résine photo-polymérisable, on applique le film polarisant réflecteur 18 par sa couche de nivellement transparente 42 contre la cellule à cristal liquide 2 et on polymérise la couche de nivellement transparente 42 au moyen d'un rayonnement ultraviolet.

Selon une variante non représentée au dessin, le film polarisant réflecteur 18 est mis en relief par un procédé connu sous sa dénomination anglo-saxonne Insert-Injection Moulding. Ce procédé consiste à disposer le film polarisant réflecteur 18 entre un moule présentant des formes en relief qui correspondent aux formes que l'on cherche à imprimer à ce polariseur réflectif 24 et un contre-moule plan. On injecte ensuite un matériau transparent tel qu'un matériau époxy, un polymère thermoplastique ou bien un matériau silicone entre le contre-moule et le film polarisant réflecteur 18. Ce matériau transparent va former la couche de nivellement transparente après démoulage. Chauffé directement ou bien par l'intermédiaire du matériau transparent que l'on injecte, le film polarisant réflecteur 18 est forcé à épouser les reliefs du moule sous l'effet de la pression d'injection. Une couche d'adhésif peut être insérée entre le contre-moule et le matériau transparent, ou bien être appliquée sur la face plane de la couche de nivellement transparente après démoulage.

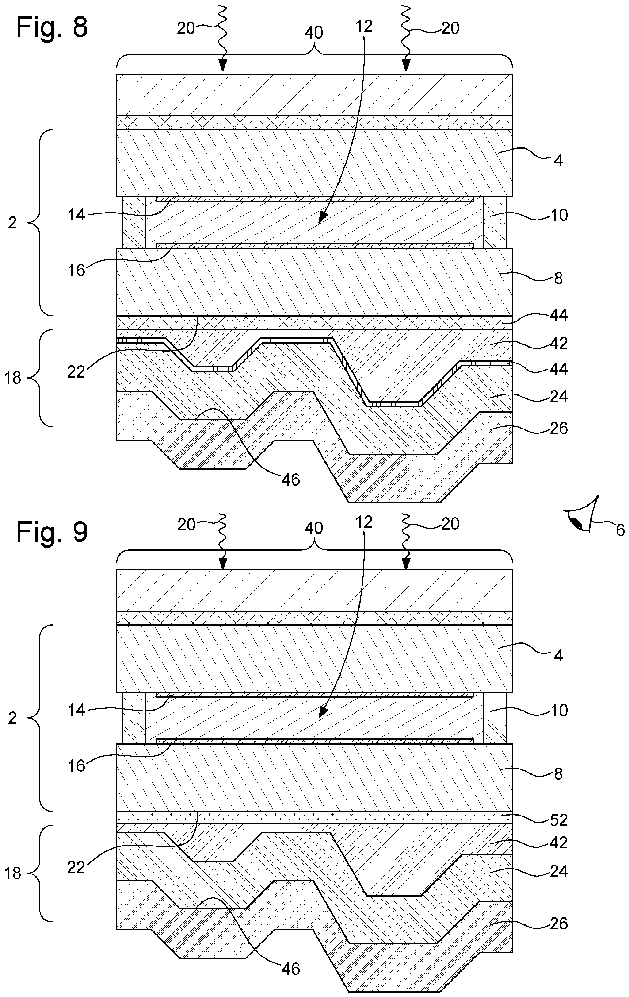

Afin que les informations affichées par la cellule à cristal liquide 2 sous forme de caractères alphabétiques ou numériques ou bien encore d'icônes se détachent sur un fond plan homogène de type diffusant, il est possible d'utiliser de la colle optiquement transparente au moins partiellement diffusante. Il est également possible, avant la mise en relief du film polarisant réflecteur 18, de munir ce dernier sur sa face supérieure 48 d'une couche diffusante 50 afin de créer une réflexion au moins partiellement diffuse (figure 7). Après dépôt de la couche diffusante 50 et mise en relief du film polarisant réflecteur 18, la couche diffusante 50 est recouverte d'une couche de nivellement transparente 42, après quoi le film polarisant réflecteur 18 est fixé contre la face inférieure 22 du substrat arrière 8 de la cellule à cristal liquide 2 au moyen d'une couche d'adhésif 44 optiquement transparent (figure 8).

De même, après mise en relief du film polarisant réflecteur 18 comprenant un polariseur réflectif 24 combiné avec un fond 26 noir ou coloré et dépôt dans les creux du film polarisant réflecteur 18 de la couche de nivellement transparente 42, le film polarisant réflecteur 18 peut être fixé sur la face inférieure 22 du substrat arrière 8 de la cellule à cristal liquide 2 au moyen d'une couche d'adhésif 52 optiquement diffusante (figure 9).

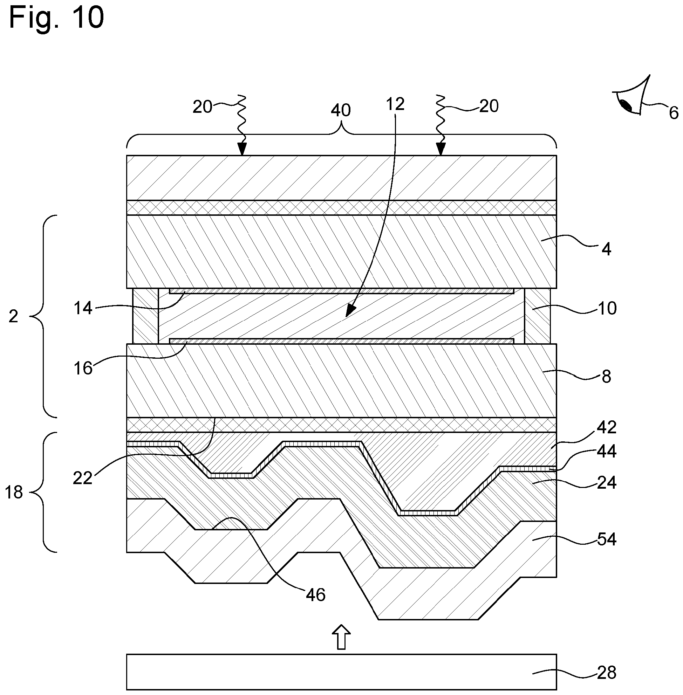

Comme visible sur la figure 10, le fond 26 noir ou coloré appliqué au dos 46 du polariseur réflectif 24 est remplacé par un polariseur absorbant 54 solidarisé contre le dos 46 de ce polariseur réflectif 24. L'ensemble formé par le polariseur réflectif 24 et le polariseur absorbant 54 est ensuite mis en relief, puis on dépose dans les creux du polariseur réflectif 24 une couche de nivellement transparente 42. Cette couche de nivellement transparente 42 est recouverte d'une couche d'adhésif 44 via laquelle l'ensemble formé par le polariseur réflectif 24 et le polariseur absorbant 54 est fixé contre la face inférieure 22 du substrat arrière 8. Finalement, un dispositif de rétroéclairage 28 est disposé sous la cellule à cristal liquide 2.

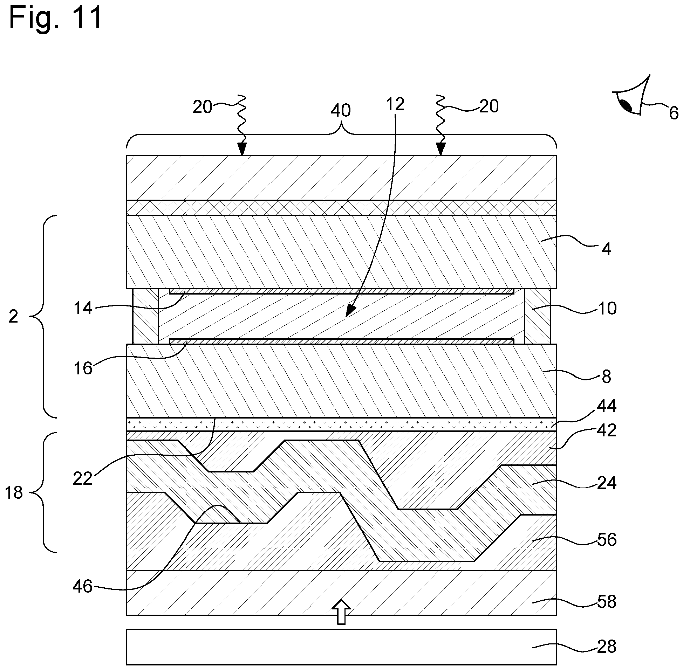

De même, comme il ressort de la figure 11 annexée à la présente demande de brevet, il est également possible de déposer une couche de nivellement transparente 56 dans les creux du polariseur réflectif 24 du côté du dos 46 de ce dernier. On peut mettre à profit la planéité de la couche de nivellement transparente 56 pour laminer d'autres films comme un polariseur absorbant 58. Le montage est complété par un dispositif de rétroéclairage 28 disposé sous la cellule à cristal liquide 2.

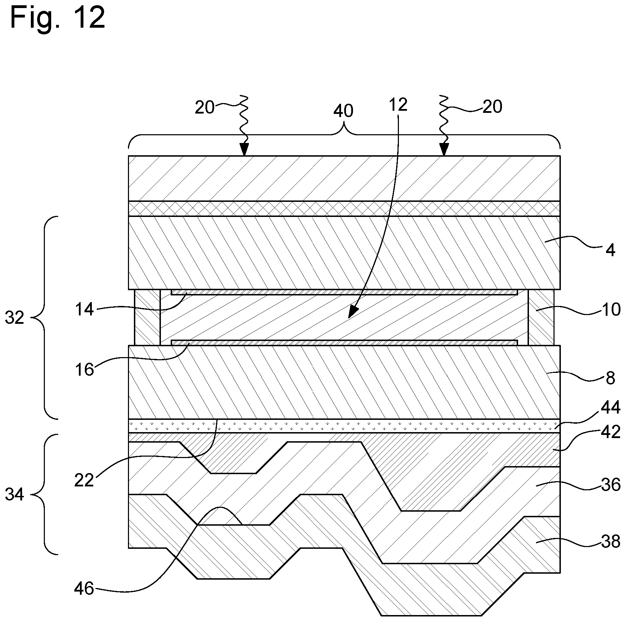

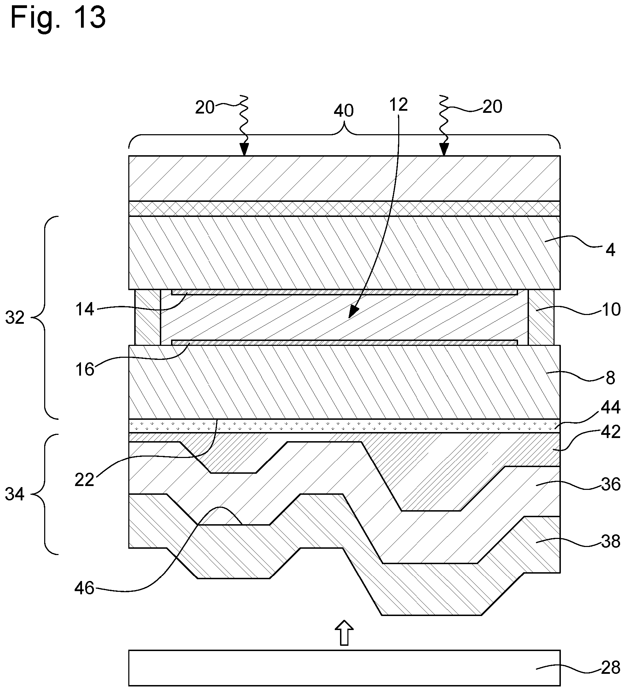

Dans ce qui suit et en liaison avec les figures 12 et 13, on s'intéresse au cas de la cellule à cristal liquide 32 munie du film polarisant réflecteur 34 comprenant un polariseur absorbant 36 combiné avec un réflecteur 38 au moins partiellement réfléchissant. Lorsque ce réflecteur 38 qui est préférentiellement mais non limitativement métallique n'est que partiellement réfléchissant, la cellule à cristal liquide 32 est transflective et un dispositif de rétroéclairage 28 est disposé sous le film polarisant réflecteur 34. La mise en relief de l'ensemble formé par le film polarisant réflecteur 34 et son réflecteur 38 peut être obtenue par thermoformage ou déformation à froid contre un moule présentant des formes en relief qui correspondent aux formes que l'on cherche à imprimer à ce film polarisant réflecteur 34 dans les mêmes conditions que celles décrites ci-avant en liaison avec l'ensemble formé par le polariseur réflectif 24 et le fond 26 noir ou coloré. Une fois le film polarisant réflecteur 34 mis en forme, on dépose dans les creux du polariseur absorbant 36 une couche de nivellement transparente 42 formée par exemple d'une résine photo-polymérisable sensible au rayonnement ultraviolet. Avant ou après polymérisation de la couche de nivellement transparente 42, on dépose sur la couche de nivellement transparente 42 la couche d'adhésif 44 optiquement transparent au moyen de laquelle le film polarisant réflecteur 34 est fixé contre la face inférieure 22 du substrat arrière 4.

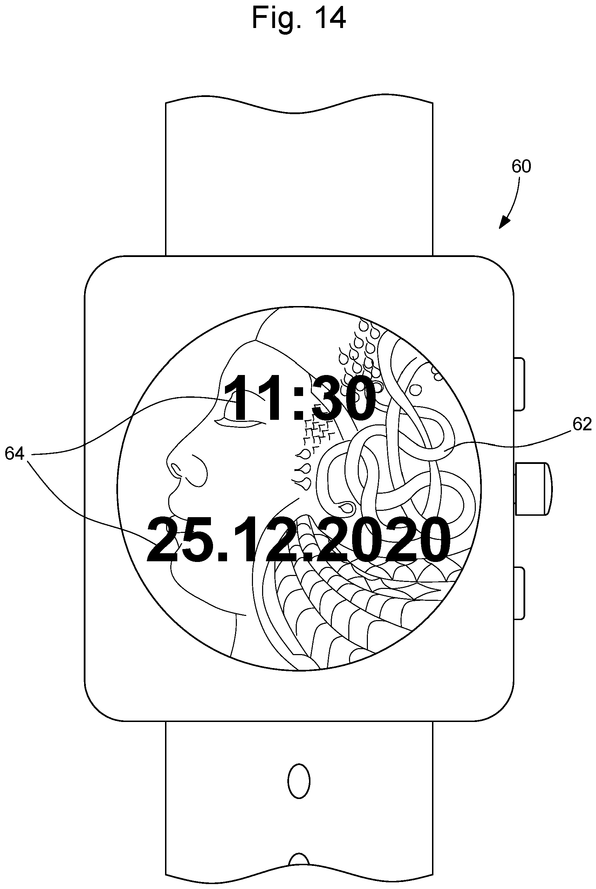

La figure 14 est une vue d'une montre-bracelet 60 équipée d'une cellule à cristal liquide dont le film polarisant réflecteur, disposé sous le dispositif d'affichage à cristal liquide, a été mis en relief pour afficher une image figurative 62 d'un camé à travers la surface d'affichage utile de la cellule à cristal liquide. On voit ainsi que les informations utiles 64 affichées par le dispositif d'affichage à cristal liquide se superposent à l'image figurative 62 formée dans le film polarisant réflecteur, de manière permanente ou à la demande, ce qui confère à la montre-bracelet 60 un aspect esthétique tout à fait remarquable et novateur. Bien entendu, le film polarisant réflecteur peut être mis en forme pour afficher non pas une image figurative mais des informations techniques comme par exemple une graduation qui va coopérer avec une information affichée par le dispositif d'affichage à cristal liquide.

**Il** va de soi que la présente invention n'est pas limitée aux modes de réalisation d'un dispositif d'affichage à cristal liquide réflectif ou transflectif qui viennent d'être décrits et que diverses modifications et variantes simples peuvent être envisagées par l'homme du métier sans sortir du cadre de l'invention tel que défini par les revendications annexées. On rappellera en particulier que par polariseur réflectif on entend un polariseur qui réfléchit une direction de polarisation de la lumière et qui transmet la direction de polarisation de la lumière orthogonale. De même, on entend par polariseur absorbant un polariseur qui absorbe une composante de la lumière et qui transmet l'autre composante de la lumière qui est orthogonale à la composante de la lumière absorbée. On notera également que la présente invention s'applique à des cellules à cristal liquide de type réflectif ou transmissif dont les molécules de cristal liquide sont alignées de manière planaire, c'est-à-dire avec leur grand axe qui s'étend parallèlement aux substrats de la cellule à cristal liquide, ou bien dont les molécules de cristal liquide sont alignées de manière verticale, c'est-à-dire avec leur grand axe qui s'étend perpendiculairement aux substrats de la cellule à cristal liquide. Des exemples de telles cellules à cristaux liquides sont donnés par les cellules à cristaux liquide de type nématique en hélice, super nématique en hélice, guest host ou bien encore à alignement vertical ou à biréfringence contrôlée électriquement, mieux connues sous leurs dénominations anglo-saxonnes respectives Vertically Aligned et Electrically Controlled Birefringence.

### Nomenclature

1. Dispositif d'affichage à cristal liquide
2. Cellule à cristal liquide
4. Substrat avant
6. Observateur
8. Substrat arrière
10. Cadre de scellement
12. Enceinte étanche
14. Electrodes
16. Contre-électrodes
18. Film polarisant réflecteur
20. Lumière
22. Face inférieure
24. Polariseur réflectif
25. Couche d'adhésif
26. Fond
27. Couche d'adhésif
28. Dispositif de rétroéclairage
29. Polariseur absorbant
30. Dispositif d'affichage à cristal liquide
31. Face supérieure
32. Cellule à cristal liquide
33. Couche d'adhésif
34. Film polarisant réflecteur
36. Polariseur absorbant
38. Réflecteur
40. Surface d'affichage utile
42. Couche de nivellement transparente
44. Couche d'adhésif
46. Dos
48. Face supérieure
50. Couche diffusante
52. Couche d'adhésif
54. Polariseur absorbant
56. Couche de nivellement transparente
58. Polariseur absorbant
60. Montre-bracelet
62. Image figurative
64. Informations utiles

## Revendications

1. Procédé de fabrication d'un dispositif d'affichage à cristal liquide (1 ; 30) comprenant une cellule à cristal liquide (2 ; 32) réflective ou transflective dont les molécules de cristal liquide sont alignées de manière planaire ou verticale, cette cellule à cristal liquide (2 ; 32) étant formée d'un substrat avant (4) transparent situé du côté d'un observateur (6), et d'un substrat arrière (8), également transparent, qui s'étend sous le substrat avant (4), parallèlement et à distance de celui-ci, ces deux substrats avant (4) et arrière (8) étant réunis entre eux au moyen d'un cadre de scellement (10) qui délimite une enceinte étanche (12) dans laquelle une composition de cristal liquide est confinée, les substrats avant (4) et arrière (8) étant revêtus sur leurs faces en regard d'électrodes (14) et de contre-électrodes (16) transparentes électriquement conductrices, les propriétés optiques de la composition de cristal liquide étant modifiées par application d'un champ électrique au point de croisement entre une électrode (14) et une contre-électrode (16) correspondante, le dispositif d'affichage à cristal liquide (1 ; 30) étant muni d'un film polarisant réflecteur (18 ; 34) agencé pour absorber une première composante d'une lumière (20) qui pénètre dans la cellule à cristal liquide (2 ; 32) par le substrat avant (4), et pour réfléchir une seconde composante de la lumière (20) polarisée selon une direction orthogonale à celle de la première composante, le procédé comprenant l'étape qui consiste à mettre le film polarisant réflecteur (18 ; 34) en relief pour lui impartir une forme décorative et/ou fonctionnelle visible par l'observateur (6) à travers le substrat avant (4) de la cellule à cristal liquide (2 ; 32), puis à fixer ce film polarisant réflecteur (18 ; 34) contre une face inférieure (22) du substrat arrière (8), le film polarisant réflecteur (18, 34) comprenant un polariseur réflectif (24) qui réfléchit une direction de polarisation de la lumière et qui transmet la direction de polarisation de la lumière orthogonale ou un polariseur absorbant (36) qui absorbe une composante de la lumière et transmet l'autre composante de la lumière qui est orthogonale à la composante de la lumière absorbée et **caractérisé en ce que** la mise en relief du film polarisant réflecteur (18, 34) comprend la mise en relief du polariseur réflectif (24) ou du polariseur absorbant (36).

2. Procédé de fabrication selon la revendication 1, **caractérisé en ce que** le film polarisant réflecteur (18 ; 34) est mis en relief en le plaquant contre un moule présentant des formes en relief qui correspondent aux formes que l'on cherche à imprimer à ce film polarisant réflecteur (18 ; 34).

3. Procédé de fabrication selon la revendication 2, **caractérisé en ce que** le film polarisant réflecteur (18 ; 34) est plaqué contre le moule en relief en créant un vide d'air.

4. Procédé de fabrication selon l'une des revendications 2 et 3, **caractérisé en ce que**, durant le temps où le film polarisant réflecteur (18 ; 34) est plaqué contre le moule en relief, ce film polarisant réflecteur (18 ; 34) est chauffé.

5. Procédé de fabrication selon la revendication 1, **caractérisé en ce que** le film polarisant réflecteur (18 ; 34) est mis en relief par insert-injection moulding.

6. Procédé de fabrication selon l'une des revendications 2 à 4, **caractérisé en ce que**, une fois le film polarisant réflecteur (18 ; 34) mis en relief, on dépose successivement sur une face supérieure (48) du film polarisant réflecteur (18 ; 34) une couche de nivellement transparente (42) et une couche d'adhésif (44 ; 52) au moyen de laquelle le film polarisant réflecteur (18 ; 34) est fixé à la cellule à cristal liquide (2 ; 32).

7. Procédé de fabrication selon la revendication 6, **caractérisé en ce qu'**immédiatement après mise en relief du film polarisant réflecteur (18 ; 34) et dépôt de la couche de nivellement transparente (42), on applique la cellule à cristal liquide (2 ; 32) contre la couche de nivellement transparente (42) et on solidifie la couche de nivellement transparente (42).

8. Procédé de fabrication selon l'une des revendications 6 et 7, **caractérisé en ce que** la couche d'adhésif (44 ; 52) est formée d'un adhésif optiquement transparent encore appelé Optical Clear Adhesive ou OCA qui se présente sous la forme d'un film sensible à la pression qui est laminé sur la couche de nivellement transparente (42) ou qui est dispensé en couche de colle liquide sur cette couche de nivellement transparente (42).

9. Procédé de fabrication selon la revendication 8, **caractérisé en ce que** l'adhésif optiquement transparent est partiellement diffusant.

10. Procédé de fabrication selon l'une des revendications 6 à 9, **caractérisé en ce que** l'on dépose au dos (46) du film polarisant réflecteur (18 ; 34) une couche de nivellement transparente (56).

11. Procédé de fabrication selon l'une des revendications 6 à 10, **caractérisé en ce que** la couche de nivellement transparente (42) déposée sur la face supérieure (48) du film polarisant réflecteur (18 ; 34) et, le cas échéant, la couche de nivellement transparente (56) déposée au dos (46) du film polarisant réflecteur (18 ; 34) sont obtenues au moyen d'une résine photo-polymérisable.

12. Procédé de fabrication selon la revendication 11, **caractérisé en ce que** la couche de nivellement transparente (42) déposée sur la face supérieure (48) du film polarisant réflecteur (18 ; 34) et, le cas échéant, la couche de nivellement transparente (56) déposée au dos (46) du film polarisant réflecteur (18 ; 34), sont polymérisées au moyen d'un rayonnement ultraviolet.

13. Procédé de fabrication selon l'une des revendications 1 à 12, **caractérisé en ce que**, avant sa mise en relief, le film polarisant réflecteur (18 ; 34) est muni sur une face supérieure (48) d'une couche diffusante (50) afin de créer une réflexion au moins partiellement diffuse.

14. Procédé de fabrication selon l'une des revendications 1 à 13, **caractérisé en ce que** le film polarisant réflecteur (18) comprend un polariseur réflectif (24) combiné avec un fond (26) au moins partiellement absorbant disposé au dos (46) du polariseur réflectif (24).

15. Procédé de fabrication selon la revendication 14, **caractérisé en ce que** le fond (26) au moins partiellement absorbant est noir ou coloré.

16. Procédé de fabrication selon la revendication 15, **caractérisé en ce que** le fond (26) noir ou coloré est une couche d'encre ou un film laminé appliqué au dos (46) du polariseur réflectif (24) soit avant mise en forme de ce polariseur réflectif (24), de sorte que ce fond (26) noir ou coloré est mis en forme en même temps que le polariseur réflectif (24), ou bien après mise en forme du polariseur réflectif (24).

17. Procédé de fabrication selon l'une des revendications 14 à 16, **caractérisé en ce que**, lorsque le fond (26) est partiellement absorbant, un dispositif de rétroéclairage (28) est disposé sous ce fond (26).

18. Procédé de fabrication selon l'une des revendications 1 à 13, **caractérisé en ce que** le film polarisant réflecteur (18) comprend un polariseur réflectif (24) combiné avec un polariseur absorbant (54) qui est collé au dos (46) du polariseur réflectif (24), l'ensemble des deux polariseurs réflectif (24) et absorbant (54) étant mis en relief simultanément.

19. Procédé de fabrication selon l'une des revendications 1 à 13, **caractérisé en ce que** le film polarisant réflecteur (34) comprend un polariseur absorbant (36) combiné avec un réflecteur (38) au moins partiellement réfléchissant disposé sous le polariseur absorbant (36).

20. Procédé de fabrication selon la revendication 19, **caractérisé en ce que** le réflecteur (38) est métallique.

21. Procédé de fabrication selon l'une des revendications 19 et 20, **caractérisé en ce que**, lorsque le réflecteur (38) est partiellement réfléchissant, un dispositif de rétroéclairage (28) est disposé sous le film polarisant réflecteur (34).

22. Dispositif d'affichage à cristal liquide (1 ; 30) obtenu par le procédé selon l'une des revendications 1 à 21, comprenant une cellule à cristal liquide (2 ; 32) réflective ou transflective dont les molécules de cristal liquide sont alignées de manière planaire ou verticale, cette cellule à cristal liquide (2 ; 32) étant formée d'un substrat avant (4) transparent situé du côté d'un observateur (6), et d'un substrat arrière (8), également transparent, qui s'étend sous le substrat avant (4), parallèlement et à distance de celui-ci, ces deux substrats avant (4) et arrière (8) étant réunis entre eux au moyen d'un cadre de scellement (10) qui délimite une enceinte étanche (12) dans laquelle une composition de cristal liquide est confinée, les substrats avant (4) et arrière (8) étant revêtus sur leurs faces en regard d'électrodes (14) et de contre-électrodes (16) transparentes électriquement conductrices, les propriétés optiques de la composition de cristal liquide étant modifiées par application d'un champ électrique au point de croisement entre une électrode (14) et une contre-électrode (16) correspondante, le dispositif d'affichage à cristal liquide (1 ; 30) étant muni d'un film polarisant réflecteur (18 ; 34) pour absorber une première composante d'une lumière qui pénètre dans la cellule à cristal liquide (2 ; 32) par le substrat avant (4), et pour réfléchir une seconde composante de la lumière polarisée selon une direction orthogonale à celle de la première composante, le film polarisant réflecteur (14 ; 34) présentant des reliefs décoratifs et/ou fonctionnels visibles par un observateur (6) à travers le substrat avant (4) de la cellule à cristal liquide (2 ; 32), le film polarisant réflecteur (18 ; 34) étant fixé contre une face inférieure (22) du substrat arrière (8).

23. Dispositif d'affichage à cristal liquide selon la revendication 22, **caractérisé en ce que** le film polarisant réflecteur (18) comprend un polariseur réflectif (24) combiné avec un fond (26) au moins partiellement absorbant disposé au dos (46) du polariseur réflectif.

24. Dispositif d'affichage à cristal liquide selon la revendication **caractérisé en ce que** le fond (26) au moins partiellement absorbant est noir ou coloré.

25. Dispositif d'affichage à cristal liquide selon la revendication **caractérisé en ce que** le fond (26) noir ou coloré est une couche d'encre ou un film laminé appliqué au dos (46) du polariseur réflectif (24).

26. Dispositif d'affichage à cristal liquide selon la revendication **caractérisé en ce que** le film polarisant réflecteur (18) comprend un polariseur réflectif (24) combiné avec un polariseur absorbant (54) qui est collé au dos (46) du polariseur réflectif (24), l'ensemble des deux polariseurs réflectif (24) et absorbant (54) étant en relief.

27. Dispositif d'affichage à cristal liquide selon la revendication 22, **caractérisé en ce que** le film polarisant réflecteur (34) comprend un polariseur absorbant (36) combiné avec un réflecteur (38) au moins partiellement réfléchissant disposé sous le polariseur absorbant (36).

28. Dispositif d'affichage selon la revendication 27, **caractérisé en ce que** le réflecteur (38) est métallique.

29. Dispositif d'affichage selon l'une des revendications 27 et 28, **caractérisé en ce que**, lorsque le réflecteur (38) est partiellement réfléchissant, un dispositif de rétroéclairage (28) est disposé sous ce dernier.

30. Pièce d'horlogerie comprenant un dispositif d'affichage selon l'une des revendications 22 à 29.

## Patentansprüche

1. Verfahren zur Herstellung einer Flüssigkristall-Anzeigevorrichtung (1; 30), die eine reflektive oder transflektive Flüssigkristallzelle (2; 32) umfasst, deren Flüssigkristallmoleküle planar oder vertikal ausgerichtet sind, wobei diese Flüssigkristallzelle (2; 32) aus einem transparenten vorderen Substrat (4), das sich auf Seiten eines Beobachters (6) befindet, und einem ebenfalls transparenten hinteren Substrat (8) gebildet wird, das sich unter dem vorderen Substrat (4), parallel und in einem Abstand zu diesem erstreckt, wobei beide, das vordere (4) und hintere (8) Substrat anhand eines Dichtungsrahmens (10) miteinander verbunden sind, der einen dichten abgeschlossenen Raum (12) begrenzt, in dem eine Flüssigkristallzusammensetzung eingeschlossen ist, wobei das vordere (4) und hintere (8) Substrat auf ihren einander zugewandten Seiten mit transparenten, elektrisch leitenden Elektroden (14) und Gegenelektroden (16) beschichtet sind, wobei die optischen Eigenschaften der Flüssigkristallzusammensetzung durch Anlegen eines elektrischen Feldes an den Kreuzungspunkt zwischen einer Elektrode (14) und einer entsprechenden Gegenelektrode (16) verändert werden, wobei die Flüssigkristallanzeigevorrichtung (1; 30) mit einem reflektierenden Polarisationsfilm (18; 34) versehen ist, der angeordnet ist, um eine erste Komponente von Licht (20), das durch das vordere Substrat (4) in die Flüssigkristallzelle (2; 32) eintritt, zu absorbieren, und eine zweite Komponente des Lichts (20), das in einer Richtung orthogonal zu jener der ersten Komponente polarisiert ist, zu reflektieren, wobei das Verfahren den Schritt umfasst, der darin besteht, den reflektierenden Polarisationsfilm (18; 34) hervorzuheben, um ihm eine dekorative und/oder funktionelle Form zu verleihen, die für den Beobachter (6) durch das vordere Substrat (4) der Flüssigkristallzelle (2; 32) hindurch sichtbar ist, und diesen reflektierenden Polarisationsfilm (18; 34) danach an einer Unterseite (22) des hinteren Substrats (8) zu fixieren, wobei der reflektierende Polarisationsfilm (18, 34) einen reflektierenden Polarisator (24), der eine Polarisationsrichtung des Lichts reflektiert und der die Polarisationsrichtung des Lichts orthogonal durchlässt, oder einen absorbierenden Polarisator (36) umfasst, der eine Komponente des Lichts absorbiert und die andere Komponente des Lichts, die orthogonal zu der Komponente des absorbierten Lichts ist, durchlässt, und **dadurch gekennzeichnet, dass** das Hervorheben des reflektierenden Polarisationsfilms (18, 34) das Hervorheben des reflektierenden Polarisators (24) oder des absorbierenden Polarisators (36) umfasst.

2. Verfahren zur Herstellung nach Anspruch 1, **dadurch gekennzeichnet, dass** der reflektierende Polarisationsfilm (18; 34) durch Andrücken an eine Form mit hervorgehobenen Formen, die den Formen entsprechen, die dem reflektierenden Polarisationsfilm (18; 34) aufzuprägen sind, hervorgehoben wird.

3. Verfahren zur Herstellung nach Anspruch 2, **dadurch gekennzeichnet, dass** der reflektierende Polarisationsfilm (18; 34) durch Erzeugen eines Luftvakuums an die hervorgehobene Form angedrückt wird.

4. Verfahren zur Herstellung nach einem der Ansprüche 2 und 3, **dadurch gekennzeichnet, dass** während der Zeit, in der der reflektierende Polarisationsfilm (18; 34) an die hervorgehobene Form angedrückt wird, dieser reflektierende Polarisationsfilm (18; 34) erwärmt wird.

5. Verfahren zur Herstellung nach Anspruch 1, **dadurch gekennzeichnet, dass** der reflektierende Polarisationsfilm (18; 34) durch Insert-Injection-Moulding hervorgehoben wird.

6. Verfahren zur Herstellung nach einem der Ansprüche 2 bis 4, **dadurch gekennzeichnet, dass**, sobald der reflektierende Polarisationsfilm (18; 34) hervorgehoben worden ist, nacheinander auf einer Oberseite (48) des reflektierende Polarisationsfilms (18; 34) eine transparente Nivellierungsschicht (42) und eine Klebstoffschicht (44; 52) aufgebracht werden, anhand derer der reflektierende Polarisationsfilm (18; 34) an der Flüssigkristallzelle (2; 32) fixiert wird.

7. Verfahren zur Herstellung nach Anspruch 6, **dadurch gekennzeichnet, dass** unmittelbar nach dem Hervorheben des reflektierenden Polarisationsfilms (18; 34) und dem Aufbringen der transparenten Nivellierungsschicht (42) die Flüssigkristallzelle (2; 32) an die transparente Nivellierungsschicht (42) angelegt wird und die transparente Nivellierungsschicht (42) verfestigt wird.

8. Verfahren zur Herstellung nach einem der Ansprüche 6 und 7, **dadurch gekennzeichnet, dass** die Klebstoffschicht (44; 52) aus einem optisch transparenten Klebstoff gebildet wird, der auch als Optical Clear Adhesive oder OCA bezeichnet wird, der sich in Form eines druckempfindlichen Films darstellt, der auf die transparente Nivellierungsschicht (42) laminiert wird, oder der als Flüssigkleberschicht auf diese transparente Nivellierungsschicht (42) aufgetragen wird.

9. Verfahren zur Herstellung nach Anspruch 8, **dadurch gekennzeichnet, dass** der optisch transparente Klebstoff teilweise streuend ist.

10. Verfahren zur Herstellung nach einem der Ansprüche 6 bis 9, **dadurch gekennzeichnet, dass** auf der Rückseite (46) des reflektierenden Polarisationsfilms (18; 34) eine transparente Nivellierungsschicht (56) aufgebracht wird.

11. Verfahren zur Herstellung nach einem der Ansprüche 6 bis 10, **dadurch gekennzeichnet, dass** die auf der Oberseite (48) des reflektierenden Polarisationsfilms (18; 34) aufgebrachte transparente Nivellierungsschicht (42) und gegebenenfalls die auf der Rückseite (46) des reflektierenden Polarisationsfilms (18; 34) aufgebrachte transparente Nivellierungsschicht (56) anhand eines fotopolymerisierbaren Harzes erhalten werden.

12. Verfahren zur Herstellung nach Anspruch 11, **dadurch gekennzeichnet, dass** die transparente Nivellierungsschicht (42), die auf der Oberseite (48) des reflektierenden Polarisationsfilms (18; 34) aufgebracht ist, und gegebenenfalls die transparente Nivellierungsschicht (56), die auf der Rückseite (46) des reflektierenden Polarisationsfilms (18; 34) aufgebracht ist, anhand von UV-Strahlung polymerisiert werden.

13. Verfahren zur Herstellung nach einem der Ansprüche 1 bis 12, **dadurch gekennzeichnet, dass** der reflektierende Polarisationsfilm (18; 34) vor seiner Hervorhebung auf einer Oberseite (48) mit einer streuenden Schicht (50) versehen wird, um eine zumindest teilweise diffuse Reflexion zu erzeugen.

14. Verfahren zur Herstellung nach einem der Ansprüche 1 bis 13, **dadurch gekennzeichnet, dass** der reflektierende Polarisationsfilm (18) einen reflektierenden Polarisator (24) umfasst, der mit einem zumindest teilweise absorbierenden Hintergrund (26) kombiniert ist, der auf der Rückseite (46) des reflektierenden Polarisators (24) angeordnet ist.

15. Verfahren zur Herstellung nach Anspruch 14, **dadurch gekennzeichnet, dass** der zumindest teilweise absorbierende Hintergrund (26) schwarz oder farbig ist

16. Verfahren zur Herstellung nach Anspruch 15, **dadurch gekennzeichnet, dass** der schwarze oder farbige Hintergrund (26) eine Tintenschicht oder ein laminierter Film ist, der auf die Rückseite (46) des reflektierenden Polarisators (24) entweder vor dem Formen des reflektierenden Polarisators (24), sodass der schwarze oder farbige Hintergrund (26) gleichzeitig mit dem reflektierenden Polarisator (24) geformt wird, oder nach dem Formen des reflektierenden Polarisators (24) aufgebracht wird.

17. Verfahren zur Herstellung nach einem der Ansprüche 14 bis 16, **dadurch gekennzeichnet, dass**, wenn der Hintergrund (26) teilweise absorbierend ist, eine Hintergrundbeleuchtungsvorrichtung (28) unter diesem Hintergrund (26) angeordnet wird.

18. Verfahren zur Herstellung nach einem der Ansprüche 1 bis 13, **dadurch gekennzeichnet, dass** der reflektierende Polarisationsfilm (18) einen reflektierenden Polarisator (24) umfasst, der mit einem absorbierenden Polarisator (54) kombiniert ist, der auf die Rückseite (46) des reflektierenden Polarisators (24) geklebt ist, wobei beide, der reflektierende (24) und der absorbierende (54) Polarisator gleichzeitig hervorgehoben werden.

19. Verfahren zur Herstellung nach einem der Ansprüche 1 bis 13, **dadurch gekennzeichnet, dass** der reflektierende Polarisationsfilm (34) einen absorbierenden Polarisator (36) umfasst, der mit einem zumindest teilweise reflektierenden Reflektor (38) kombiniert ist, der unterhalb des absorbierenden Polarisators (36) angeordnet ist

20. Verfahren zur Herstellung nach Anspruch 19, **dadurch gekennzeichnet, dass** der Reflektor (38) metallisch ist.

21. Verfahren zur Herstellung nach einem der Ansprüche 19 und 20, **dadurch gekennzeichnet, dass**, wenn der Reflektor (38) teilweise reflektierend ist, eine Hintergrundbeleuchtungsvorrichtung (28) unter dem reflektierenden Polarisationsfilm (34) angeordnet ist.

22. Flüssigkristall-Anzeigevorrichtung (1; 30), die durch das Verfahren nach einem der Ansprüche 1 bis 21 erhalten wird, die eine reflektive oder transflektive Flüssigkristallzelle (2; 32) umfasst, deren Flüssigkristallmoleküle planar oder vertikal ausgerichtet sind, wobei diese Flüssigkristallzelle (2; 32) aus einem vorderen transparenten Substrat (4), das sich auf Seiten eines Beobachters (6) befindet, und einem hinteren, ebenfalls transparenten Substrat (8) gebildet wird, das sich unter dem vorderen Substrat (4) parallel und in einem Abstand zu diesem erstreckt, wobei das vordere (4) und hintere (8) Substrat anhand eines Dichtungsrahmens (10) miteinander verbunden sind, der einen dichten abgeschlossenen Raum (12) begrenzt, in dem eine Flüssigkristallzusammensetzung eingeschlossen ist, wobei das vordere (4) und hintere (8) Substrat auf ihren einander zugewandten Seiten mit transparenten, elektrisch leitenden Elektroden (14) und Gegenelektroden (16) beschichtet sind, wobei die optischen Eigenschaften der Flüssigkristallzusammensetzung durch Anlegen eines elektrischen Feldes an den Kreuzungspunkt zwischen einer Elektrode (14) und einer entsprechenden Gegenelektrode (16) verändert werden, wobei die Flüssigkristallanzeigevorrichtung (1; 30) mit einem reflektierenden Polarisationsfilm (18; 34) versehen ist, um eine erste Komponente von Licht, das durch das vordere Substrat (4) in die Flüssigkristallzelle (2; 32) eintritt, zu absorbieren, und eine zweite Komponente des polarisierten Lichts in einer Richtung orthogonal zu jener der ersten Komponente zu reflektieren, wobei der reflektierende Polarisationsfilm (14; 34) dekorative und/oder funktionelle Reliefs aufweist, die für einen Beobachter (6) durch das vordere Substrat (4) der Flüssigkristallzelle (2; 32) hindurch sichtbar sind, wobei der reflektierende Polarisationsfilm (18; 34) an einer Unterseite (22) des hinteren Substrats (8) fixiert ist.

23. Flüssigkristall-Anzeigevorrichtung nach Anspruch 22, **dadurch gekennzeichnet, dass** der reflektierende Polarisationsfilm (18) einen reflektierenden Polarisator (24) umfasst, der mit einem zumindest teilweise absorbierenden Hintergrund (26) kombiniert ist, der auf der Rückseite (46) des reflektierenden Polarisators angeordnet ist.

24. Flüssigkristall-Anzeigevorrichtung nach Anspruch 23, **dadurch gekennzeichnet, dass** der zumindest teilweise absorbierende Hintergrund (26) schwarz oder farbig ist.

25. Flüssigkristall-Anzeigevorrichtung nach Anspruch 24, **dadurch gekennzeichnet, dass** der schwarze oder farbige Hintergrund (26) eine Tintenschicht oder ein laminierter Film ist, der auf die Rückseite (46) des reflektierenden Polarisators (24) aufgebracht ist.

26. Flüssigkristall-Anzeigevorrichtung nach Anspruch 22, **dadurch gekennzeichnet, dass** der reflektierende Polarisationsfilm (18) einen reflektierenden Polarisator (24) umfasst, der mit einem absorbierenden Polarisator (54) kombiniert ist, der auf die Rückseite (46) des reflektierenden Polarisators (24) geklebt ist, wobei beide, der reflektierende Polarisator (24) und der absorbierende Polarisator (54) hervorgehoben sind.

27. Flüssigkristall-Anzeigevorrichtung nach Anspruch 22, **dadurch gekennzeichnet, dass** der reflektierende Polarisationsfilm (34) einen absorbierenden Polarisator (36) umfasst, der mit einem zumindest teilweise reflektierenden Reflektor (38) kombiniert ist, der unter dem absorbierenden Polarisator (36) angeordnet ist.

28. Anzeigevorrichtung nach Anspruch 27, **dadurch gekennzeichnet, dass** der Reflektor (38) metallisch ist.

29. Anzeigevorrichtung nach einem der Ansprüche 27 und 28, **dadurch gekennzeichnet, dass**, wenn der Reflektor (38) teilweise reflektierend ist, eine Hintergrundbeleuchtungsvorrichtung (28) unterhalb dieses letzteren angeordnet ist.

30. Uhrmachereistück, das eine Anzeigevorrichtung nach einem der Ansprüche 22 bis 29 umfasst.

## Claims

1. Method of fabricating a liquid crystal display device (1; 30) comprising a reflective or transflective liquid crystal cell (2; 32) whose liquid crystal molecules are aligned in a planar or vertical manner, said liquid crystal cell (2; 32) being formed of a transparent front substrate (4) located on the side of an observer (6), and a rear substrate (8), also transparent, which extends beneath the front substrate (4), parallel to and at a distance from the latter, these two front (4) and rear (8) substrates being joined to each other by means of a sealing frame (10) which defines a sealed enclosure (12) in which a liquid crystal composition is confined, the front (4) and rear (8) substrates being coated on their opposite faces with electrically conductive transparent electrodes (14) and counter-electrodes (16), the optical properties of the liquid crystal composition being modified by application of an electric field at the point of intersection between an electrode (14) and a corresponding counter-electrode (16), the liquid crystal display device (1; 30) being provided with a reflective polarizing film (18; 34) arranged to absorb a first component of light (20) which enters the liquid crystal cell (2; 32) through the front substrate (4), and to reflect a second component of light (20) polarized in a direction orthogonal to that of the first component, the method including the step which consists in embossing the reflective polarizing film (18; 34) to impart thereto a decorative and/or functional shape visible to the observer (6) through the front substrate (4) of the liquid crystal cell (2; 32), and then securing this reflective polarizing film (18; 34) to an underside (22) of the rear substrate (8), the reflective polarizing film (18; 34) comprising a reflective polarizer (24) which reflects a direction of polarization of light and which transmits the orthogonal direction of polarization of light, or an absorbent polarizer (36) which absorbs one component of light and which transmits the other component of light which is orthogonal to the absorbed component of light, and **characterized in that** the embossing of the reflective polarizing film (18; 34) comprises embossing the reflective polarizer (24) or the absorbent polarizer (36).

2. Fabrication method according to claim 1, **characterized in that** the reflective polarizing film (18; 34) is embossed by being pressed against a mould having relief shapes which correspond to the shapes which it is desired to imprint on said reflective polarizing film (18; 34).

3. Fabrication method according to claim 2, **characterized in that** the reflective polarizing film (18; 34) is pressed against the relief mould by creating an air vacuum.

4. Fabrication method according to any of claims 2 and 3, **characterized in that**, during the time that the reflective polarizing film (18; 34) is pressed against the relief mould, said reflective polarizing film (18; 34) is heated.

5. Fabrication method according to claim 1, **characterized in that** the reflective polarizing film (18; 34) is embossed by insert injection moulding.

6. Fabrication method according to any of claims 2 to 4, **characterized in that** once the reflective polarizing film (18; 34) is embossed, there are successively deposited on an upper face (48) of the reflective polarizing film (18; 34) a transparent levelling layer (42) and an adhesive layer (44; 52) by means of which the reflective polarizing film (18; 34) is secured to the liquid crystal cell (2; 32).

7. Fabrication method according to claim 6, **characterized in that** immediately after the reflective polarizing film (18; 34) is embossed and the transparent levelling layer (42) is deposited, the liquid crystal cell (2; 32) is applied to the transparent levelling layer (42) and the transparent levelling layer (42) is solidified.

8. Fabrication method according to any of claims 6 and 7, **characterized in that** the adhesive layer (44; 52) is formed of an optically transparent adhesive also known as Optically Clear Adhesive or 'OCA' which takes the form of a pressure sensitive film which is laminated to the transparent levelling layer (42) or which is dispensed as a layer of liquid adhesive on said transparent levelling layer (42).

9. Fabrication method according to claim 8, **characterized in that** the optically clear adhesive is partially diffusive.

10. Fabrication method according to any of claims 6 to 9, **characterized in that** a transparent levelling layer (56) is deposited on the back (46) of the reflective polarizing film (18; 34).

11. Fabrication method according to any of claims 6 to 10, **characterized in that** the transparent levelling layer (42) deposited on the upper face (48) of the reflective polarizing film (18; 34) and, where appropriate, the transparent levelling layer (56) deposited on the back (46) of the reflective polarizing film (18; 34), are obtained by means of a photopolymerizable resin.

12. Fabrication method according to claim 11, **characterized in that** the transparent levelling layer (42) deposited on the upper face (48) of the reflective polarizing film (18; 34) and, where appropriate, the transparent levelling layer (56) deposited on the back (46) of the reflective polarizing film (18; 34) are polymerized by ultraviolet radiation.

13. Fabrication method according to any of claims 1 to 12, **characterized in that**, before being embossed, an upper face (48) of the reflective polarizing film (18; 34) is provided with a diffusion layer (50) in order to create an at least partially diffuse reflection.

14. Fabrication method according to any of claims 1 to 13, **characterized in that** the reflective polarizing film (18) comprises a reflective polarizer (24) combined with an at least partially absorbent background layer (26) arranged on the back (46) of the reflective polarizer (24).

15. Fabrication method according to claim 14, **characterized in that** the at least partially absorbent background layer (26) is black or coloured.

16. Fabrication method according to claim 15, **characterized in that** the black or coloured background layer (26) is an ink layer or a laminated film applied to the back (46) of the reflective polarizer (24), either before the shaping of said reflective polarizer (24), so that said black or coloured background layer (26) is shaped at the same time as the reflective polarizer (24), or after the shaping of the reflective polarizer (24).

17. Fabrication method according to any of claims 14 to 16, **characterized in that**, when the background layer (26) is partially absorbent, a backlight device (28) is arranged underneath said background layer (26).

18. Fabrication method according to any of claims 1 to 13, **characterized in that** the reflective polarizing film (18) comprises a reflective polarizer (24) combined with an absorbent polarizer (54) which is bonded to the back (46) of the reflective polarizer (24), the assembly of the two reflective (24) and absorbent (54) polarizers being embossed simultaneously.

19. Fabrication method according to any of claims 1 to 13, **characterized in that** the reflective polarizing film (34) comprises an absorbent polarizer (36) combined with an at least partially reflective reflector (38) arranged underneath the absorbent polarizer (36).

20. Fabrication method according to claim 19, **characterized in that** the reflector (38) is metallic.

21. Fabrication method according to any of claims 19 and 20, **characterized in that**, when the reflector (38) is partially reflective, a backlight device (28) is arranged underneath the reflective polarizing film (34).

22. Liquid crystal display device (1; 30) obtained using the method according to any of claims 1 to 21, comprising a reflective or transflective liquid crystal cell (2; 32) whose liquid crystal molecules are aligned in a planar or vertical manner, said liquid crystal cell (2; 32) being formed of a transparent front substrate (4) located on the side of an observer (6), and a rear substrate (8), also transparent, which extends beneath the front substrate (4), parallel to and at a distance from the latter, said two front (4) and rear (8) substrates being joined to each other by means of a sealing frame (10) which defines a sealed enclosure (12) in which a liquid crystal composition is confined, the front (4) and rear (8) substrates being coated on their opposite faces with electrically conductive transparent electrodes (14) and counter-electrodes (16), the optical properties of the liquid crystal composition being modified by application of an electric field at the point of intersection between an electrode (14) and a corresponding counter-electrode (16), the liquid crystal display device (1; 30) being provided with a reflective polarizing film (18; 34) to absorb a first component of light which enters the liquid crystal cell (2; 32) through the front substrate (4), and to reflect a second component of light polarized in a direction orthogonal to that of the first component, the reflective polarizing film (14; 34) having decorative and/or functional relief portions visible to an observer (6) through the front substrate (4) of the liquid crystal cell (2; 32), the reflective polarizing film (18; 34) being secured to an underside (22) of the rear substrate (8).

23. Liquid crystal display device according to claim 22, **characterized in that** the reflective polarizing film (18) comprises a reflective polarizer (24) combined with an at least partially absorbent background layer (26) arranged on the back (46) of the reflective polarizer.

24. Liquid crystal display device according to claim 23, **characterized in that** the at least partially absorbent background layer (26) is black or coloured.

25. Liquid crystal display device according to claim 24, **characterized in that** the black or coloured background layer (26) is an ink layer or a laminated film applied to the back (46) of the reflective polarizer (24).

26. Liquid crystal display device according to claim 22, **characterized in that** the reflective polarizing film (18) comprises a reflective polarizer (24) combined with an absorbent polarizer (54) which is bonded to the back (46) of the reflective polarizer (24), the assembly of the two reflective (24) and absorbent (54) polarizers being embossed.

27. Liquid crystal display device according to claim 22, **characterized in that** the reflective polarizing film (34) comprises an absorbent polarizer (36) combined with an at least partially reflective reflector (38) arranged underneath the absorbent polarizer (36).

28. Display device according to claim 27, **characterized in that** the reflector (38) is metallic.

29. Display device according to any of claims 27 and 28, **characterized in that**, when the reflector (38) is partially reflective, a backlight device (28) is arranged underneath said reflector.

30. Timepiece comprising a display device according to any of claims 22 to 29.
